(19) Europäisches Patentamt

European Patent Office

Office européen des brevets

(11) **EP 3 244 040 B1**

(12) **EUROPEAN PATENT SPECIFICATION**

(45) Date of publication and mention
of the grant of the patent:
**12.02.2020 Bulletin 2020/07**

(21) Application number: **17170487.7**

(22) Date of filing: **10.05.2017**

(51) Int Cl.:
*F02C 9/28* (2006.01)          *F02C 9/54* (2006.01)
*F02C 7/22* (2006.01)          *F23N 1/00* (2006.01)

(54) **MULTIVARIABLE FUEL CONTROL AND ESTIMATOR (MFCE) FOR PREVENTING COMBUSTOR BLOWOUT**

MULTIVARIABLE TREIBSTOFFKONTROLLE UND -SCHÄTZER (MFCE) ZUR VERHINDERUNG VON BRENNKAMMERAUSBLASEN

COMMANDE ET ESTIMATEUR DE CARBURANT MULTIVARIABLE POUR LA PRÉVENTION DE L'EXTINCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2016 US 201615152182**

(43) Date of publication of application:
**15.11.2017 Bulletin 2017/46**

(73) Proprietor: **United Technologies Corporation
Farmington, CT 06032 (US)**

(72) Inventors:
• **CROWLEY, Timothy J.
Tolland, CT Connecticut 06084 (US)**
• **SELSTAD, Tyler J.
West Hartford, CT Connecticut 06107 (US)**
• **GELWAN, David
Glastonbury, CT Connecticut 06033 (US)**

(74) Representative: **Dehns
St. Bride's House
10 Salisbury Square
London EC4Y 8JD (GB)**

(56) References cited:
**EP-A2- 1 632 718        US-A1- 2011 265 487
US-A1- 2012 036 863     US-A1- 2014 093 350**

**Description**

BACKGROUND

The subject matter disclosed herein generally relates to fuel control through gas turbine engines and, more particularly, to fuel control and estimation for preventing combustor blowout.

Gas turbine engines include fuel systems that are complex. Interactions between fuel system components, and interactions with a fuel consumption unit that is connected to and receives fuel from the fuel system, can cause undesirable dynamic perturbations in delivered fuel flow. The fuel consumption unit can be an engine, or more specifically, a combustor that receives delivered fuel flow from the fuel system.

Excessive dynamic fuel flow perturbations can impact combustor flame stability, and can precipitate a loss of flame (blowout) and associated loss of engine thrust. For example, a sudden transition by the fuel system to a new state using a valve, actuator, or some other component can cause a sudden pulse of fuel through the combustor followed by transient oscillations in delivered fuel flow as the system equilibrates to the new state. A pulse in fuel through the combustor can cause a compressor surge, while a transient decrease in delivered fuel flow can cause a combustor blowout.

Currently, gas turbine engines compensate for these conditions by either avoiding them by limiting how and when certain valves, actuators, and other parts operate, or by physically changing the hardware to mitigate the condition.

Accordingly, there is a desire to prevent compressor surge and combustor blowout without having to implement the above discussed hardware usage limitations or having to make costly design changes to fuel system hardware components and/or fuel system architecture.

US 2012/036863 A1 discloses a system for controlling a fuel-to-air ratio of a fuel and air mixture according to a desired combustible lean limit of the fuel.

SUMMARY

Viewed from one aspect the present invention provides a multivariable fuel control and estimator of a gas turbine engine for preventing a combustor blowout according to claim 1. Viewed from another aspect the present invention provides a method according to claim 12.

In addition to one or more of the features described above, or as an alternative, further embodiments may include, wherein the output port is connected to a valve and an actuator of the fuel system, wherein the control signals control the valve and actuator.

In addition to one or more of the features described above, or as an alternative, further embodiments may include, wherein the controller requests included in the first input include one or more from a group consisting of a specific fuel amount request, , and an actuator position request.

In addition to one or more of the features described above, or as an alternative, further embodiments may include, wherein the measured disturbance values include one or more of valve sensor, command signal data, and pump speed.

In addition to one or more of the features described above, or as an alternative, further embodiments may include, wherein the system and component limits include one or more of a fuel flow minimum, a fuel flow maximum range, and rate limits.

In addition to one or more of the features described above, or as an alternative, further embodiments may include, wherein the sensed parameters include one or more of fuel flow, valve position, and engine sensor readings.

In addition to one or more of the features described above, or as an alternative, further embodiments may include, wherein the control signals control the flow rate of the fuel delivered to the combustor by adjusting one or more of an actuator and a valve of the fuel system.

In addition to one or more of the features described above, or as an alternative, further embodiments may include, wherein generating the control signals includes predicting a fluid flow delivered to the combustor using the fuel system model and engine model, adjusting one or more of a valve and actuator values in the fuel system model, recalculating the fluid flow in the fuel system, and repeating until the calculated fluid flow matches a desired fuel flow value delivered to the combustor.

In addition to one or more of the features described above, or as an alternative, further embodiments may include, wherein the MFCE minimizes deviation of fuel flow to the combustor.

According to another embodiment, a gas turbine engine is provided. The gas turbine engine includes an engine system that includes a combustor that receives and burns fuel, a fuel system that includes a fuel supply connected to at least one valve and actuator, wherein the fuel system is connected to the engine system and provides fuel to the combustor, and a multivariable fuel control and estimator (MFCE) for preventing combustor blowout, the MFCE including a first input port configured to receive controller requests and provide system usage commands, a second input port configured to receive measured disturbance values, a third input configured to receive system and component limits, a fourth input port configured to receive sensed parameters from the fuel system and the engine system, a fuel system model of the fuel system of the gas turbine engine and an engine model of the engine system that includes the combustor of the gas turbine engine, a processor that generates a control signal for controlling the fuel valve and generates a control signal for controlling the actuator using the fuel system model and the engine model based on the controller requests, the measured disturbance values, the system and component limits, and the sensed parameters, and an output port that is configured to transmit the control signals to the fuel system.

In addition to one or more of the features described above, or as an alternative, further embodiments may include, wherein the output port is connected to a valve and an actuator of the fuel system, wherein the control signals control the valve and actuator.

In addition to one or more of the features described above, or as an alternative, further embodiments may include, wherein the controller requests included in the first input include one or more from a group consisting of a specific fuel amount request and an actuator command.

In addition to one or more of the features described above, or as an alternative, further embodiments may include, wherein the measured disturbance values include one or more of valve sensor, command signal data, and pump speed.

In addition to one or more of the features described above, or as an alternative, further embodiments may include, wherein the system and component limits include one or more of a fuel flow minimum, a fuel flow maximum range, and rate limits.

In addition to one or more of the features described above, or as an alternative, further embodiments may include, wherein the sensed parameters include one or more of fuel flow, valve position, and engine sensor readings.

In addition to one or more of the features described above, or as an alternative, further embodiments may include, wherein the control signals control the flow rate of fuel delivered to the combustor by adjusting one or more of an actuator and a valve of the fuel system.

In addition to one or more of the features described above, or as an alternative, further embodiments may include, wherein generating the control signals include predicting a fluid flow in the fuel system using the fuel system model, adjusting one or more of a valve and actuator values in the fuel system model, recalculating the fluid flow in the fuel system, and repeating until the calculated fluid flow matches a desired fluid flow value.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The subject matter is particularly pointed out and distinctly claimed at the conclusion of the specification. The foregoing and other features and advantages of the present disclosure are apparent from the following detailed description taken in conjunction with the accompanying drawings in which:

FIG. 1 is a schematic cross-sectional illustration of a gas turbine engine that may employ various embodiments;
FIG. 2 is a block diagram of a fuel system of a gas turbine engine that may employ various embodiments;
FIG. 3 is a block diagram of an MFCE in accordance with one or more embodiments;
FIG. 4 is a flow chart of a method of preventing blowout using an MFCE in accordance with one or more embodiments; and
FIG. 5 is a block diagram of a fuel control assembly in accordance with one or more embodiments.

DETAILED DESCRIPTION

As shown and described herein, various features of the disclosure will be presented. Various embodiments may have the same or similar features and thus the same or similar features may be labelled with the same reference numeral, but preceded by a different first number indicating the Figure Number to which the feature is shown. Thus, for example, element "a" that is shown in FIG. X may be labelled "Xa" and a similar feature in FIG. Z may be labelled "Za". Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

One or more embodiments described herein are directed to a multivariable fuel control and estimator (MFCE) that compensates for measured and/or observable dynamic disturbances in the fuel flowing through the fuel system to a fuel consumption unit such as, a storage container, an engine, or a combustor portion of a gas turbine engine. In accordance with one or more embodiments, the MFCE includes a high fidelity, nonlinear fuel system model for accurate dynamic fuel flow prediction and simultaneous prediction of dynamic interactions between actuators and fuel flow. The MFCE also incorporates predictions of engine fuel system interactions through the inclusion of not only the fuel system model but also an engine system model.

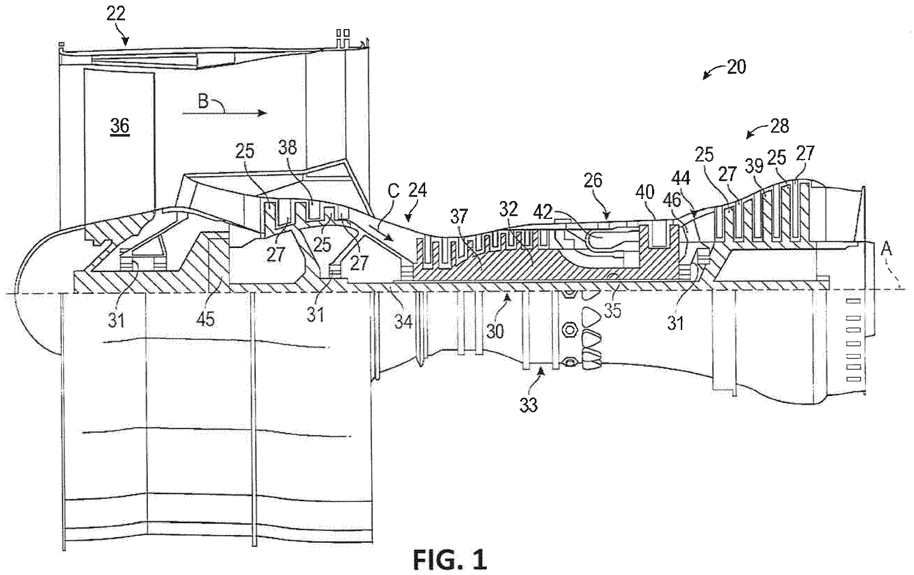

For example, turning now to FIG. 1, a schematic cross-sectional view of a gas turbine engine 20 is shown in accordance with one or more exemplary embodiments.

Specifically, FIG. 1 schematically illustrates a gas turbine engine 20 that is a two-spool turbofan engine that generally incorporates a fan section 22, a compressor section 24, a combustor section 26, and a turbine section 28. Alternative engines might include an augmenter section (not shown) among other systems for features. The fan section 22 drives air along a bypass flow path B, while the compressor section 24 drives air along a core flow path C for compression and communication into the combustor section 26. Hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centreline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centreline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only examples of one embodiment of a geared architecture engine and that the present disclosure is applicable to other gas turbine engines, including direct drive turbofans.

In an embodiment of the gas turbine engine 20, a significant amount of thrust is provided by the bypass flow path B due to the high bypass ratio. The fan section 22 of the gas turbine engine 20 is designed for a particular flight condition - typically cruise at about 0.8 Mach and about 35,000 feet (about 10,700 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Each of the compressor section 24 and the turbine section 28 may include alternating rows of rotor assemblies and vane assemblies that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

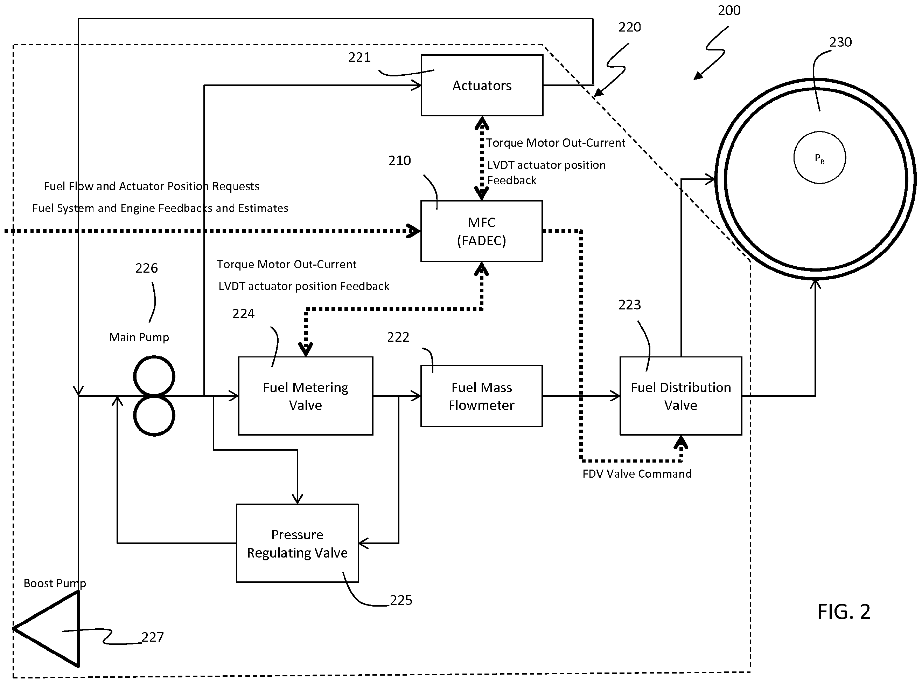

FIG. 2 is a block diagram of a system 200 that includes a fuel system 220 connected to a gas turbine engine 230, that is substantially similar to the gas turbine engine 20 of FIG. 1, that may employ various embodiments disclosed herein. The system 200 includes a boost pump 227 that pumps fuel from a fuel tank to the engine 230. Further, the fuel system 220 includes a MFCE (FADEC) 210 that is connected to all the other components within the fuel system 220. Specifically, the fuel system 220 includes a fuel metering valve 224, a fuel mass flowmeter 222, a fuel distribution valve 223, a pressure regulating valve 225, a main pump 226, and one or more actuators 221.

The fuel metering valve 224 is connected to the MFCE 210 and can transmit a number of different values to the MFCE and receive control signals in return. For example, the fuel metering valve 224 can transmit position feedback to the MFCE 210. In return, the MFCE 210 can process that information along with other received data and transmit torque motor out current to provide control signals specifying if and by how much the fuel metering valve 224 should be adjusted.

Similarly actuators 221 are connected to the MFCE 210 and can provide similar values to the MFCE for processing. Particularly, the actuators 221 can provide actuator position feedback information and in return can receive a torque motor out current control signal. The fuel distribution valve 223 is also connected to the MFCE 210 and can receive a valve command from the MFCE 210.

The pressure regulating valve 225 can also communicate with and receive commands from the MFCE 210 in one or more embodiments even though it is not shown in FIG. 2. Further, the MFCE 210 may also communicate with the boost pump 227 and the main pump 226.

According to the illustrated embodiment, the MFCE 210 can receive fuel flow and actuator position requests from a user. The MFCE 210 can also receive additional fuel system 220 sensed parameters such as a flow signal from the mass flow meter 222 and engine 230 sensed parameters such as combustor pressure. The MFCE 210 can use these inputs, along with the data received from the actuators and valves, to calculate control commands for each of the connected devices in order to regulate the fuel flow to the engine 230.

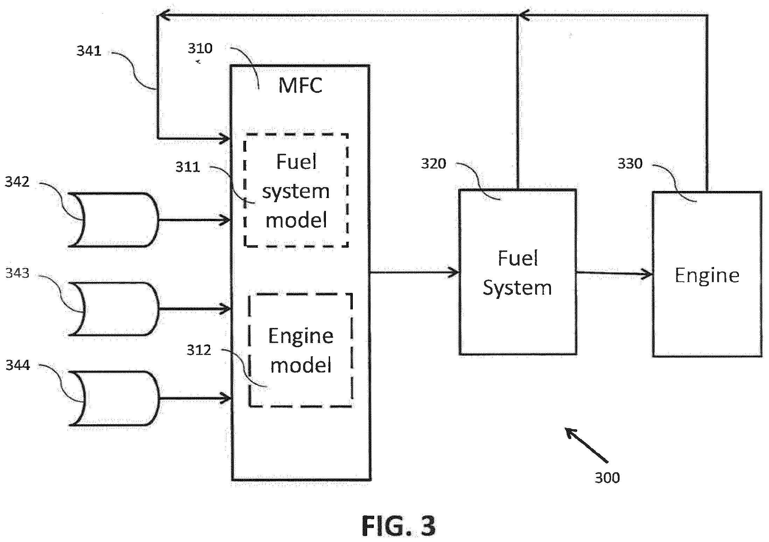

FIG. 3 is a block diagram of a system 300 that includes an MFCE 310 in accordance with one or more embodiments of the present disclosure. As shown, the MFCE 310 receives at least four types on inputs 341, 342, 343, 344. The MFCE 310 also includes a fuel system model 311 and an engine mode 312. The input values are received and applied to the models to generate the control signals that are output to the actual fuel system 320 and engine 330. The fuel system 320 and the engine, in turn, provide present values of sensed parameter signals 341 back to the MFCE 310 that is used to generate fuel system control signals for the fuel metering valve 224 and other fuel system control components.

Further, as also shown in FIG. 3, a first input port 342 receives controller requests configured to provide system usage commands. The system usage commands include commands that define properties of one or more devices of the system. For example, a system usage command can define broadly how much thrust, throttle, and/or fuel should be provided or can specifically define which valves or actuators should be open and closed, by how much, and at what time and rate. A second input port 343 receives command signals from other FADEC functions external to the MFCE, for example, an external signal to command the fuel distribution valve. A third input port 344 receives system and component limits. These inputs are used in the fuel system model 311 and engine model 312 to calculate a fuel metering valve 224 position commands and commands to other fuel system control components to achieve delivered fuel flow that prevents compressor surge and/or combustor blowout.

According to one or more embodiments the external command signal values 343 including external valve commands (not commanded by MFCE), and additional parameters from other FADEC functions. According to one or more embodiments the system and component limits include one or more from a group consisting of for example, valve and actuator position range and rate limits and fuel flow minimum and a fuel flow maximum range and rate limits. According to one or more embodiments the sensed parameters can include mass flow of fuel at one or more locations in fuel system, and engine sensor readings, such as combustor pressure. The MFCE controls the flow rate of fuel delivered to the engine and controls actuator positions by adjusting torque motor out current commands to one or more of the actuators and valves of the fuel system.

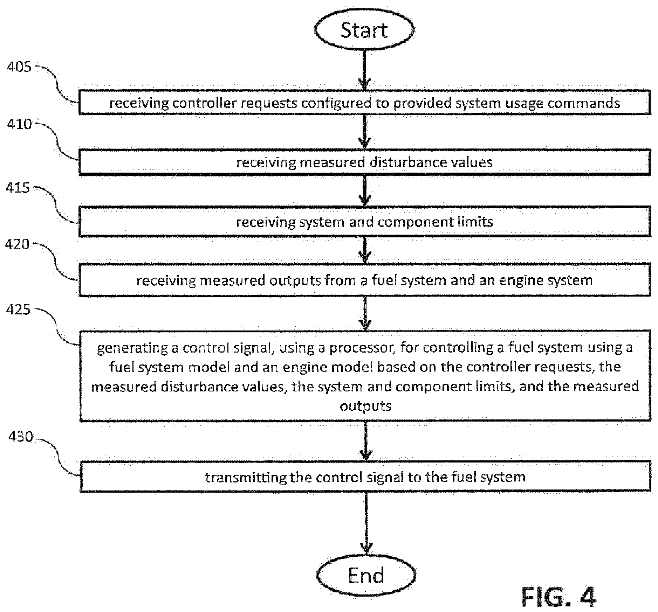

FIG. 4 is a flow chart of a method 400 of preventing blowout using an MFCE in accordance with one or more embodiments of the present disclosure. The method 400 includes receiving controller requests configured to provide system usage commands (operation 405). The method 400 also includes receiving measured disturbance values (operation 410). The method 400 also includes receiving system and component limits (operation 415). The method 400 also includes receiving measured outputs from a fuel system and an engine system (operation 420). The method 400 also includes generating a control signal, using a processor, for controlling a fuel system using a fuel system model and an engine model based on the controller requests, the measured disturbance values, the system and component limits, and the measured outputs (operation 425). The method 400 also includes transmitting the control signal to the fuel system (operation 430).

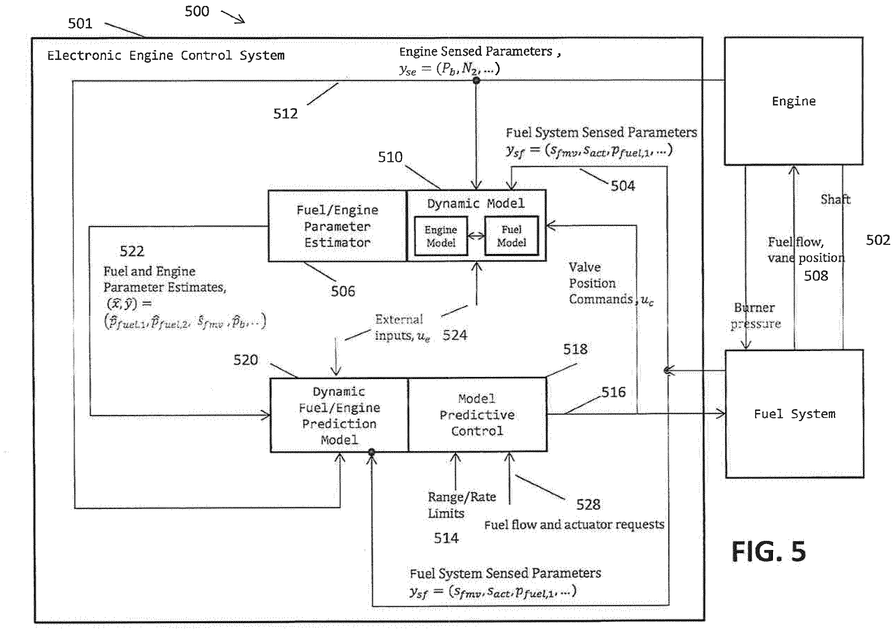

FIG. 5 is block diagram of a fuel control assembly 500. Specifically, FIG. 5 depicts a MFCE architecture, according to one or more embodiments. The logic flow paths indicated in FIG. 5 reflect one time step in an iteratively repeating real time control process. The various blocks represent distinct processes performed by an electronic engine control system 501, but may share common hardware such as controller 210 of FIG. 2. A dynamic model 510 and fuel/engine parameter estimator block 506, dynamic fuel/engine prediction model 520 and model predictive control block 518, may be logically separable software algorithms running on a shared processor or multiple parallel processors of a FADEC or other computing device. The electronic engine control system 501 is a digital controller that specifies fuel system valve position commands, $u_c$, for valve and actuator systems of a fuel and engine system 502 according to model predictive control laws 518, and based on a plurality of sensed and/or estimated fuel and engine parameters. In particular, a dynamic model 510 receives valve position commands from a model predictive control block 518. A fuel and engine system 502 also receives the valve position commands and provides a plurality of inputs for the MFCE control system including fuel system sensed parameters 504 and engine sensed parameters 512 to dynamic model 510. The dynamic model 510 also receives external inputs from other functions within the electronic engine control 501 which can include failure flags and control component commands not commanded by the model predictive control 518. The fuel and engine system 502 also provides engine sensed parameters 512 and fuel system sensed parameters 504 to a dynamic fuel/engine prediction model 520 and receives commands 516, from model predictive control 518, to adjust fuel metering valve 224 and actuators 221. The fuel/engine parameter estimator 506 can provide fuel/engine parameter estimates 522 to the dynamic fuel/engine prediction model 520. The model predictive control 518 can determine the valve and actuator commands 516 based on predicted parameters from the dynamic fuel/engine prediction model 520, external inputs 524, fuel system valve and actuator range and rate limits 514, and fuel flow and actuator position requests 528.

In some embodiments, the dynamic model 510 can include differential-algebraic equations (DAE) for fuel system and engine components, capturing mass, momentum and energy transport within and between these components. A high-level mathematical description of the differential-algebraic equations capturing fuel system and/or engine dynamics is given in Equations 1 and 2 as follows.

$$\dot{x} = f(x, u_e, u_c) \qquad \text{(Equation 1)}$$

$$y = g(x, u_e) \qquad \text{(Equation 2)}$$

In these equations, x represents system dynamic states, $u_e$ represents external inputs such as FADEC command signals that are not computed by model predictive control 518, and $u_c$ represents valve position commands. The dynamic model 510 includes a plurality of model parameters that are not shown in these equations. The vector of states, x, includes fuel system dynamic states such as fuel pressures and metering valve position and velocity. The vector of outputs, y, includes model parameters that parallel the sensed parameters. The dynamic model 210 can compute estimates of model dynamic states at the current or k'th time step starting from corresponding state estimates from the preceding time step, according to an embodiment illustrated in Equation 5

$$\hat{x}_k^- = \hat{x}_{k-1} + H_{k-1} \cdot f\left(\hat{x}_{k-1}, u_{e,k-1}, u_{c,k-1}\right)\Delta t \qquad \text{(Equation 5)}$$

Stability of this numerical integration of the state derivative vector, f, is achieved using a Jacobian-stabilization matrix $H$. This matrix can represent various approximations to stable implicit algorithms for numerical integration. Jacobian stabilization ensures stability of the state propagation (Equation 5) for fast dynamic states such as fuel pressure states. The embodiment represented in Equation 6 represents an approximation to implicit Euler integration.

$$H_{k-1} = \left(I - A_{k-1}\Delta t\right)^{-1} \qquad \text{(Equation 6)}$$

Equations for the state Jacobian, A (Equation 7), are generated symbolically from the state derivative equations, f, of the dynamic model 210.

$$A_{k-1}^{i,j} = \left[\frac{\partial f_i}{\partial x_j}\right]_{k-1} \qquad \text{(Equation 7)}$$

The Jacobian equations are implemented in the electronic engine control system 501, enabling accurate values of the state Jacobian to be computed in real-time at each time step. Additional improvements in computational efficiency of the state computation (Equation 5) can be achieved by partitioning the state vector into fast and slow states. In this case, the Jacobian stabilization, represented in Equations 5 and 6, may be applied to the fast states and omitted for slow states, thereby reducing the size of the required matrix inverse and associated computational burden.

The fuel/engine parameter estimator 506 compares estimated model parameters $\hat{y}$ with sensed fuel and engine parameters $y_{sf}, y_{se}$, to yield residuals r. The sensed parameters parallel the estimated engine parameters $\hat{y}$ but are taken from appropriate sensors from the fuel and engine system 502. In one embodiment, residuals $r$ take the form of a vector comprising error values indicating a difference between estimated and sensed outputs. The estimator produces estimates of the system states recursively according to Equation 8 and produces estimates of outputs as represented in equation 9.

$$\hat{x}_k = \hat{x}_k^- + K_k \cdot r_k \qquad \text{(Equation 8)}$$

$$\hat{y}_k = g\left(\hat{x}_k, u_{s,k}\right) \qquad \text{(Equation 9)}$$

The matrix K in Equation 8 represents the estimator gain matrix which can be computed off-line and stored as look-up tables or computed in real-time using the symbolically generated Jacobian equations. The fuel/engine parameter estimator forwards estimates for present values of fuel/engine states and outputs 522 to the dynamic fuel/engine prediction model 520.

The purpose of the model predictive control 518 is to command fuel metering valve 224 and actuator 221 positions to minimize deviations of delivered fuel flow and actuator positions 508 from requested flow and positions 528. The dynamic model 510 and fuel/engine parameter estimator 506 provide present values of fuel/engine parameter estimates to the dynamic fuel/engine prediction model. The dynamic fuel/engine prediction model 520 includes an equivalent of the dynamic model 510, and provides future values of fuel/engine parameter estimates to the model predictive control 518. Prediction of delivered fuel flow and actuator positions can include a base trajectory prediction with valve and actuator position commands held at the current positions (Equations 10 and 11), a correction to the base trajectory driven by changes in metering valve 224 and actuator 221 position commands from the current valve positions, and correction of the model predictions (where applicable) with a model bias estimate, for predicted model variables that parallel corresponding sensed parameters (Equations 12-16). This model bias output correction term is represented by the last term on the RHS of Equation 12.

$$\hat{x}_{k+l}^0 = \hat{x}_{k+l-1}^0 + H_k \cdot f\left(\hat{x}_{k+l-1}^0, u_{s,k}, u_{c,k-1}\right)\Delta t \qquad \text{(Equation 10)}$$

$$\hat{y}_{k+l}^0 = g\left(\hat{x}_{k+l}^0, u_{s,k}\right) \qquad \text{(Equation 11)}$$

$$\hat{y}_{k+l} = \hat{y}_{k+l}^0 + S_{k+l} \cdot \Delta U_{c,k} + d\hat{y}_{k+l} \qquad \text{(Equation 12)}$$

$$\Delta U_{c,k} = \begin{bmatrix} \Delta u_{c,k} & \Delta u_{c,k+1} & \cdots & \Delta u_{c,k+l-1} & \cdots & \Delta u_{c,k+N_p-1} \end{bmatrix}' \qquad \text{(Equation 13)}$$

$$S_{k+l} = C_k\begin{bmatrix} \sum_{n=1}^{l} H_k^n B_k \Delta t & \sum_{n=1}^{l-1} H_k^n B_k \Delta t & \cdots & H_k B_k \Delta t & \cdots 0 \cdots 0 \end{bmatrix} \qquad \text{(Equation 14)}$$

$$B_k^{i,j} = \left[\frac{\partial f_i}{\partial u_{cj}}\right]_k \qquad \text{(Equation 15)}$$

$$C_k^{i,j} = \left[\frac{\partial g_i}{\partial x_j}\right]_k \qquad \text{(Equation 16)}$$

The dynamic fuel/engine prediction model 520 computes base trajectory predictions of dynamic states from the current, k'th time step to the k + Np time step, where Np represents the model predictive control prediction horizon and is a control design parameter that influences control dynamic performance and stability. The model predictive control block produces predictions of the system states and outputs recursively such as given in Equations 10 and 11, respectively. This equation captures the prediction of model dynamic states, for zero change in valve commands, at a discrete time step that is $l$ time steps into the future relative to the current time, k, where $l$ is a parameter between 1 and Np (the prediction horizon endpoint). Similarly to the estimator state propagation given in Equation 5, stability of the numerical integration of the state derivative vector, $f$, is achieved using a Jacobian-stabilization matrix $H_k$ as defined in Equation 6.

The dynamic fuel/engine prediction model block 520 computes the overall predicted state and output vector trajectories by superposition of the base trajectories with corrections to the base trajectories due to fuel metering valve 224 and actuator 221 position command changes, as given in Equation 12. The second term on RHS of Equation 12 represents deviations from the base trajectory due to predicted changes to fuel metering valve 224 and actuator 221 position commands. In some embodiments, the sensitivity matrix, $S_{k+l}$, is constructed at each timestep by applying the Jacobians computed at the current k'th time step across the entire prediction horizon. This assumption is reflected in the sensitivity matrix embodiment given in Equation 14 which uses Jacobians (Equations 15 and 16) computed at the current k'th time step. The trailing zeros in this sensitivity matrix reflect lack of causality of valve position commands on the state and output predictions at the k + $l$ time step for valve commands that are applied after this time step. The model predictive control 518 computes changes to fuel metering valve 224 and actuator 221 position commands to minimize deviations of delivered fuel flow and actuator positions 508 from requested flow and positions 528. More specifically, given equations for fuel flow and actuator position predictions (Equation12) implemented in block 520, in some embodiments, the position commands 516, shown in Equation 13, can be computed by formulating and solving a Quadratic Programming (QP) problem at each update of the control 501. Numerous techniques for formulating and solving such programming problems are available.

Advantageously, embodiments described herein provide enhanced safety and reliability in prevention of combustor blowouts and stall events. Further, advantageously, embodiments provided herein my enable a reduced fuel burn on fuel limit loops, through more accurate fuel flow estimation. Moreover, embodiments provided here may reduce nuisance track check faults through onboard use of high fidelity, nonlinear fuel-draulic system model. Furthermore, embodiments provided herein may reduce system cost by avoiding hardware overdesign. Further, providing a high fidelity on board model that can help provide better fault dynamics and can actively compensate for bad interaction with a controller.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

**Claims**

1. A multivariable fuel control and estimator (MFCE) of a gas turbine engine for preventing combustor blowout, the MFCE comprising:

   a first input port (342) that is configured to receive controller requests and provide system usage commands;
   a second input port (343) that is configured to receive measured disturbance values in the fuel flow;
   a third input port (344) that is configured to receive system and component limits;
   a fourth input port (341) that is configured to receive fuel system sensed parameters (504) from a fuel system (220; 320) and engine sensed parameters (512) from an engine system (330);
   a fuel system model (311) of the fuel system of the gas turbine engine and an engine model (312) of the engine system that includes the combustor of the gas turbine engine, wherein the fuel system model (311) is a non-linear fuel system model providing accurate dynamic fuel flow prediction and simultaneous prediction of dynamic interactions between actuators and fuel flow;
   a processor configured to generate a control signal for controlling the fuel valve (224) and configured to generate a control signal for controlling the actuator (221) using the fuel system model (311) and the engine model (312) based on the controller requests, the measured disturbance values, the system and component limits, and the sensed parameters to prevent combustion blowout; and
   an output port that transmits the control signals to the fuel system (220; 320).

2. The MFCE of claim 1, wherein the output port is connected to a valve (224) and an actuator (221) of the fuel system (220; 320), wherein the control signals control the valve and actuator.

3. The MFCE of claim 1 or claim 2, wherein the controller requests (528) included in the first input include one or more from a group consisting of a specific fuel amount request, and an actuator position request.

4. The MFCE of any preceding claim, wherein the measured disturbance values include one or more of valve sensor, command signal data, and pump speed.

5. The MFCE of any preceding claim, wherein the system and component limits (514) include one or more of a fuel flow minimum, a fuel flow maximum range, and rate limits.

6. The MFCE of any preceding claim, wherein the sensed parameters include one or more of fuel flow, valve position, and engine sensor readings.

7. The MFCE of any preceding claim, wherein the control signals control the flow rate of the fuel delivered to the combustor by adjusting one or more of an actuator (221) and a valve (224) of the fuel system.

8. The MFCE of any preceding claim, wherein generating the control signals comprises predicting a fluid flow delivered to the combustor using the fuel system model (311) and engine model (312), adjusting one or more of a valve and actuator values in the fuel system model, recalculating the fluid flow in the fuel system, and repeating until the calculated fluid flow matches a desired fuel flow value delivered to the combustor.

9. The MFCE of any preceding claim, wherein the MFCE minimizes deviation of fuel flow to the combustor.

10. A gas turbine engine comprising:

    an engine system (330) that comprises a combustor that receives and burns fuel;
    a fuel system (220; 320) that comprises a fuel supply connected to at least one valve (224) and actuator (221), wherein the fuel system is connected to the engine system and provides fuel to the combustor; and
    a multivariable fuel control and estimator (MFCE) for preventing combustor blowout as claimed in any of claims 1 to 7.

11. The gas turbine engine of claim 10, wherein generating the control signals comprise predicting a fluid flow in the fuel system (220; 320) using the fuel system model (311) and an engine model (312), adjusting one or more of a valve and actuator values in the fuel system model, recalculating the fluid flow in the fuel system, and repeating until the calculated fluid flow matches a desired fluid flow value.

12. A method for preventing combustor blowout using a multivariable fuel control and estimator (MFCE) of a gas turbine engine according to claims 1 to 9, the method comprising:

    receiving controller requests (528) configured to provide system usage commands;
    receiving measured disturbance values;
    receiving system and component limits (514);
    receiving measured outputs (504, 512) from a fuel system (220; 320) and an engine system (330);
    generating a control signal, using a processor, for controlling a fuel system using a fuel system model (311) and an engine model (312) based on the controller requests, the measured disturbance values, the system and component limits, and the measured outputs, wherein the fuel system model (311) is a nonlinear fuel system model providing accurate dynamic fuel flow prediction and simultaneous predition of dynamic interactions between actuators and fuel flow; and
    transmitting the control signals to the fuel system (220; 320).

## Patentansprüche

1. Multivariable Treibstoffsteuerungs- undschätzvorrichtung (MFCE) eines Gasturbinentriebwerks zum Verhindern von Flammabriss, wobei die MFCE Folgendes umfasst:

    eine erste Einlassöffnung (342), die dazu konfiguriert ist, Steueranfragen zu empfangen und Systemnutzungsbefehle bereitzustellen;
    eine zweite Einlassöffnung (343), die dazu konfiguriert ist, gemessene Störgrößen in dem Treibstofffluss zu empfangen;

eine dritte Einlassöffnung (344), die dazu konfiguriert ist, System- und Bauteilgrenzen zu empfangen;

eine vierte Einlassöffnung (341), die dazu konfiguriert ist, vom Treibstoffsystem erfasste Parameter (504) von einem Treibstoffsystem (220; 320) und von einem Triebwerk erfasste Parameter (512) von einem Triebwerkssystem (330) zu empfangen;

ein Treibstoffsystemmodell (311) des Treibstoffsystems des Gasturbinentriebwerks und ein Triebwerkmodell (312) des Triebwerkssystems, das die Brennkammer des Gasturbinentriebwerks einschließt, wobei das Treibstoffsystemmodell (311) ein nichtlineares Treibstoffsystemmodell ist, das eine akkurate dynamische Treibstoffflussvorhersage und eine simultane Vorhersage dynamischer Interaktionen zwischen Aktoren und Treibstofffluss bereitstellt;

einen Prozessor, der dazu konfiguriert ist, ein Steuersignal zum Steuern des Treibstoffventils (224) zu erzeugen, und der dazu konfiguriert ist, ein Steuersignal zum Steuern des Aktors (221) mithilfe des Treibstoffsystemmodells (311) und des Triebwerkmodells (312) auf Grundlage der Steueranfragen, der gemessenen Störgrößen, der System- und Bauteilgrenzen und der erfassten Parameter zum Verhindern von Flammabriss zu erzeugen; und

eine Auslassöffnung, die die Steuersignale an das Treibstoffsystem (220; 320) überträgt.

2. MFCE nach Anspruch 1, wobei die Auslassöffnung an ein Ventil (224) und einen Aktor (221) des Treibstoffsystems (220; 320) angeschlossen ist, wobei die Steuersignale das Ventil und den Aktor steuern.

3. MFCE nach Anspruch 1 oder 2, wobei die Steueranfragen (528), die in dem ersten Einlass eingeschlossen sind, eines oder mehrere aus einer Gruppe bestehend aus einer spezifischen Treibstoffmengenanfrage und einer Aktorpositionsanfrage einschließt.

4. MFCE nach einem der vorstehenden Ansprüche, wobei die gemessenen Störgrößen eines oder mehrere von einem Ventilsensor, Befehlssignaldaten und einer Pumpgeschwindigkeit einschließen.

5. MFCE nach einem der vorstehenden Ansprüche, wobei die System- und Bauteilgrenzen (514) eines oder mehrere von einem Treibstoffflussminimum, einem Treibstoffflussmaximalbereich und Geschwindigkeitsgrenzen einschließen.

6. MFCE nach einem der vorstehenden Ansprüche, wobei die erfassten Parameter eines oder mehrere von einem Treibstofffluss, einer Ventilposition und Triebwerkssensorablesungen einschließen.

7. MFCE nach einem der vorstehenden Ansprüche, wobei die Steuersignale die Fließgeschwindigkeit des Treibstoffs steuern, der durch das Anpassen eines oder mehrerer von einem Aktor (221) und einem Ventil (224) des Treibstoffsystems an die Brennkammer geliefert wird.

8. MFCE nach einem der vorstehenden Ansprüche, wobei das Erzeugen der Steuersignale das Vorhersagen eines Fluidflusses, der mithilfe des Treibstoffsystemmodells (311) und des Triebwerkmodells (312) an die Brennkammer geliefert wird, das Anpassen eines oder mehrerer von einem Ventil und Aktorwerten in dem Treibstoffsystemmodell, das Neuberechnen des Fluidflusses in dem Treibstoffsystem und das Wiederholen umfasst, bis der berechnete Fluidfluss einem gewünschten Treibstoffflusswert entspricht, der an die Brennkammer geliefert wird.

9. MFCE nach einem der vorstehenden Ansprüche, wobei das MFCE eine Abweichung des Treibstoffflusses zu der Brennkammer minimiert.

10. Gasturbinentriebwerk, umfassend:

ein Triebwerkssystem (330), das eine Brennkammer umfasst, die Treibstoff empfängt und verbrennt;

ein Treibstoffsystem (220; 320), das eine Treibstoffzufuhr umfasst, die mit mindestens einem Ventil (224) und einem Aktor (221) verbunden ist, wobei das Treibstoffsystem mit dem Triebwerkssystem verbunden ist und der Brennkammer Treibstoff bereitstellt; und

eine multivariable Treibstoffsteuerungs- und -schätzvorrichtung (MFCE) zum Verhindern von Flammabriss nach einem der Ansprüche 1 bis 7.

11. Gasturbinentriebwerk nach Anspruch 10, wobei das Erzeugen der Steuersignale das Vorhersagen eines Fluidflusses in dem Treibstoffsystem (220; 320) mithilfe des Treibstoffsystemmodells (311) und eines Triebwerkmodells (312), das Anpassen eines oder mehrerer von einem Ventil und Aktorwerten in dem Treibstoffsystemmodell, das Neuberechnen des Fluidflusses in dem Treibstoffsystem und das Wiederholen umfasst, bis der berechnete Fluidfluss einem gewünschten Fluidflusswert entspricht.

**12.** Verfahren zum Verhindern von Flammabriss mithilfe einer multivariablen Treibstoffsteuerungs- und -schätzvorrichtung (MFCE) eines Gasturbinentriebwerks nach einem der Ansprüche 1 bis 9, wobei das Verfahren Folgendes umfasst:

Empfangen von Steueranfragen (528), die dazu konfiguriert sind, Systemnutzungsbefehle bereitzustellen;
Empfangen gemessener Störgrößen;
Empfangen von System- und Bauteilgrenzen (514);
Empfangen gemessener Auslässe (504; 512) aus einem Treibstoffsystem (220; 320) und einem Triebwerkssystem (330);
Erzeugen eines Steuersignals mithilfe eines Prozessors zur Steuerung eines Treibstoffsystems mithilfe eines Treibstoffsystemmodells (311) und eines Triebwerkmodells (312) auf Grundlage der Steueranfragen, der gemessenen Störgrößen, der System- und Bauteilgrenzen und der gemessenen Auslässe, wobei das Treibstoffsystemmodell (311) ein nichtlineares Treibstoffsystemmodell ist, das akkurate dynamische Treibstoffflussvorhersagen und simultane Vorhersagen dynamischer Interaktionen zwischen Aktoren und Treibstofffluss bereitstellt; und
Übertragen der Steuersignale an das Treibstoffsystem (220; 320).

## Revendications

**1.** Commande et estimateur de carburant multivariable (MFCE) d'un moteur à turbine à gaz pour empêcher l'éclatement d'une chambre de combustion, le système MFCE comprenant :

un premier orifice d'entrée (342) configuré pour recevoir des demandes du dispositif de commande et fournir des commandes d'utilisation du système ;
un deuxième orifice d'entrée (343) configuré pour recevoir des valeurs de perturbation mesurées dans l'écoulement de carburant ;
un troisième orifice d'entrée (344) configuré pour recevoir des limites de système et de composant ;
un quatrième orifice d'entrée (341) configuré pour recevoir des paramètres détectés de système de carburant (504) provenant d'un système de carburant (220 ; 320) et des paramètres détectés de moteur (512) provenant d'un système de moteur (330) ;
un modèle de système de carburant (311) du système de carburant du moteur à turbine à gaz et un modèle de moteur (312) du système de moteur qui comporte la chambre de combustion du moteur à turbine à gaz, dans lequel le modèle de système de carburant (311) est un modèle de système de carburant non linéaire fournissant une prédiction dynamique précise d'écoulement de carburant et une prédiction simultanée des interactions dynamiques entre des actionneurs et un écoulement de carburant ;
un processeur configuré pour générer un signal de commande pour commander la soupape de carburant (224) et configuré pour générer un signal de commande pour commander l'actionneur (221) à l'aide du modèle de système de carburant (311) et du modèle de moteur (312) sur la base des demandes du dispositif de commande, des valeurs de perturbation mesurées, des limites de système et de composant et des paramètres détectés pour empêcher l'éclatement de la chambre de combustion ; et
un orifice de sortie qui transmet les signaux de commande au système de carburant (220 ; 320).

**2.** MFCE selon la revendication 1, dans lequel l'orifice de sortie est relié à une soupape (224) et à un actionneur (221) du système de carburant (220 ; 320), dans lequel les signaux de commande commandent la soupape et l'actionneur.

**3.** MFCE selon la revendication 1 ou la revendication 2, dans lequel les demandes du dispositif de commande (528) incluses dans la première entrée comportent un ou plusieurs éléments d'un groupe constitué d'une demande de quantité de carburant spécifique et d'une demande de position de l'actionneur.

**4.** MFCE selon une quelconque revendication précédente, dans lequel les valeurs de perturbation mesurées comportent un ou plusieurs éléments parmi un capteur de soupape, des données de signal de commande et une vitesse de pompe.

**5.** MFCE selon une quelconque revendication précédente, dans lequel les limites de système et de composant (514) comportent un ou plusieurs éléments parmi un écoulement de carburant minimum, une plage d'écoulement de carburant maximum et des limites de débit.

6. MFCE selon une quelconque revendication précédente, dans lequel les paramètres détectés comportent un ou plusieurs éléments parmi l'écoulement de carburant, la position de soupape et les lectures de capteur de moteur.

7. MFCE selon une quelconque revendication précédente, dans lequel les signaux de commande commandent le débit du carburant fourni à la chambre de combustion en réglant un ou plusieurs éléments parmi un actionneur (221) et une soupape (224) du système de carburant.

8. MFCE selon une quelconque revendication précédente, dans lequel la génération des signaux de commande comprend la prédiction d'un écoulement de fluide fourni à la chambre de combustion à l'aide du modèle de système de carburant (311) et du modèle de moteur (312), le réglage d'une ou de plusieurs valeurs parmi des valeurs de soupape et d'actionneur dans le modèle de système de carburant, le recalcul de l'écoulement de fluide dans le système de carburant et la répétition jusqu'à ce que l'écoulement de fluide calculé corresponde à une valeur d'écoulement de carburant souhaitée fournie à la chambre de combustion.

9. MFCE selon une quelconque revendication précédente, dans lequel le MFCE minimise la déviation de l'écoulement de carburant vers la chambre de combustion.

10. Moteur à turbine à gaz comprenant :

un système de moteur (330) qui comprend une chambre de combustion qui reçoit et brûle du carburant ;
un système de carburant (220 ; 320) qui comprend une alimentation en carburant reliée à au moins une soupape (224) et un actionneur (221), dans lequel le système de carburant est relié au système de moteur et fournit du carburant à la chambre de combustion ; et
une commande et un estimateur de carburant multivariable (MFCE) pour empêcher l'éclatement de la chambre de combustion selon l'une quelconque des revendications 1 à 7.

11. Moteur à turbine à gaz selon la revendication 10, dans lequel la génération des signaux de commande comprend la prédiction d'un écoulement de fluide dans le système de carburant (220 ; 320) à l'aide du modèle de système de carburant (311) et d'un modèle de moteur (312), le réglage d'une ou de plusieurs valeurs parmi les valeurs d'une soupape et d'un actionneur dans le modèle de système de carburant, le recalcul de l'écoulement de fluide dans le système de carburant et la répétition jusqu'à ce que l'écoulement de fluide calculé corresponde à une valeur d'écoulement de fluide souhaitée.

12. Procédé pour empêcher l'éclatement d'une chambre de combustion à l'aide d'une commande et d'un estimateur de carburant multivariable (MFCE) d'un moteur à turbine à gaz selon les revendications 1 à 9, le procédé comprenant :

la réception de demandes du dispositif de commande (528) configurées pour fournir des commandes d'utilisation du système ;
la réception de valeurs de perturbation mesurées ;
la réception de limites de système et de composant (514) ;
la réception de sorties mesurées (504, 512) provenant d'un système de carburant (220 ; 320) et d'un système de moteur (330) ;
la génération d'un signal de commande, à l'aide d'un processeur, pour commander un système de carburant à l'aide d'un modèle de système de carburant (311) et d'un modèle de moteur (312) sur la base des demandes du dispositif de commande, des valeurs de perturbation mesurées, des limites de système et de composant et des sorties mesurées, dans lequel le modèle de système de carburant (311) est un modèle de système de carburant non linéaire fournissant une prédiction dynamique précise d'écoulement de carburant et une prédiction simultanée des interactions dynamiques entre les actionneurs et l'écoulement de carburant ; et
la transmission des signaux de commande au système de carburant (220 ; 320) .

**FIG. 1**

EP 3 244 040 B1

FIG. 2

EP 3 244 040 B1

**FIG. 3**

Start

405 — receiving controller requests configured to provided system usage commands

410 — receiving measured disturbance values

415 — receiving system and component limits

420 — receiving measured outputs from a fuel system and an engine system

425 — generating a control signal, using a processor, for controlling a fuel system using a fuel system model and an engine model based on the controller requests, the measured disturbance values, the system and component limits, and the measured outputs

430 — transmitting the control signal to the fuel system

End

FIG. 4

FIG. 5

Electronic Engine Control System

Engine Sensed Parameters ,
$y_{se} = (P_b, N_2, ...)$

Engine

Fuel System Sensed Parameters
$y_{sf} = (s_{fmv}, s_{act}, p_{fuel,1}, ...)$

Fuel/Engine
Parameter
Estimator

Dynamic Model

Engine Model

Fuel Model

Shaft

Fuel flow,
vane position
508

502

522
Fuel and Engine
Parameter Estimates,
$(\hat{x}, \hat{y}) = $
$(\hat{p}_{fuel,1}, \hat{p}_{fuel,2}, \hat{s}_{fmv}, \hat{p}_b, ...)$

Valve
Position
Commands, $u_c$

External
inputs, $u_e$  524

Burner
pressure

520

Dynamic
Fuel/Engine
Prediction
Model

Model
Predictive
Control

518

516

Fuel System

Range/Rate
Limits

Fuel flow and actuator requests

528

514

Fuel System Sensed Parameters
$y_{sf} = (s_{fmv}, s_{act}, p_{fuel,1}, ...)$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012036863 A1